# EUROPEAN PATENT SPECIFICATION

(11) **EP 4 407 516 B1**
(45) Date of publication and mention of the grant of the patent: **12.11.2025**
(21) Application number: 24151419.9
(22) Date of filing: 11.01.2024
(51) Int. Cl.: G06N 3/045, G06N 3/08, G06F 21/56, H04L 9/40

(54) **DATA-ONLY DECISION VALIDATION MODELS TO UPDATE FALSE PREDICTIONS**
MODELLE ZUR AUSSCHLIESSLICHEN DATENENTSCHEIDUNGSVALIDIERUNG ZUR AKTUALISIERUNG FALSCHER VORHERSAGEN
MODÈLES DE VALIDATION DE DÉCISION UNIQUEMENT DE DONNÉES POUR METTRE À JOUR DE FAUSSES PRÉDICTIONS

(30) Priority: 25.01.2023 US 202318159266
(43) Date of publication of application: 31.07.2024
(73) Proprietor: CrowdStrike, Inc., Sunnyvale, CA 94086 (US)
(72) Inventor: Radu, Marian, California, 94086 (US); Radu, Daniel, California, 94086 (US)
(74) Representative: Murgitroyd & Company

(56) References cited:
- US-A1- 2014 314 311
- US-A1- 2022 126 864
- ASLAM MUHAMMAD ET AL: "Adaptive Machine learning: A Framework for Active Malware Detection", 2020 16TH INTERNATIONAL CONFERENCE ON MOBILITY, SENSING AND NETWORKING (MSN), IEEE, 17 December 2020 (2020-12-17), pages 57 - 64, XP033895746, [retrieved on 20210401], DOI: 10.1109/MSN50589.2020.00025
- RAJU ANANDHARAJU DURAI ET AL: "LockBoost: Detecting Malware Binaries by Locking False Alarms", 2022 INTERNATIONAL JOINT CONFERENCE ON NEURAL NETWORKS (IJCNN), IEEE, 18 July 2022 (2022-07-18), pages 1 - 8, XP034199057, [retrieved on 20220930], DOI: 10.1109/IJCNN55064.2022.9892667

## Description

### BACKGROUND

Malicious software (malware) is an ever changing and advancing threat. Known malware can often be detected, but new malware may present itself through activities that could be malicious or benign. Security software may use artificial intelligence/machine learning to predict whether a given process or activity belong to malware. While doing this in real-time, false positive or false negative prediction are often generated, missing detection of malware or impairing legitimate activities of a computing device. One potential solution to this problem is to update the security software to improve the predictions it makes. Such updates (often called patches) create security risks of their own, with the malware pretending to be the provider of a patch/update. US2022126864 A1 discloses computing systems enabling autonomous vehicles. Aslam Muhammad et al., "Adaptive Machine Learning: A Framework for Active Malware Detection", 16th International Conference on Mobility, Sensing and Networking (MSN), IEEE, pages 57-64 (2020) discloses an adaptive Machine Learning based active malware detection framework which provides a cybersecurity solution against phishing attacks. US2014314311 A1 discloses systems and methods for classification of large amounts of documents and other data. Raju Anandharaju Durai et al., "LockBoost: Detecting Malware Binaries by Locking False Alarms", International Joint Conference on Neural Networks (IJCNN), IEEE, pages 1-8 (2022) discloses detecting malware binaries in datasets.

### SUMMARY

Accordingly there are provided methods as defined in the independent claims, a system, and a computing device as detailed in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates an overview of training and utilizing a decision prediction model to update predictions of a prediction model of the security agent when the prediction model generates false positive predictions or false negative predictions.
FIG. 2 shows an example of a system architecture for a computing device configured with a security agent.
FIG. 3 shows an example of a system architecture for a computing device configured with a security service.
FIG. 4 shows a flowchart of an example method in which a computing device with a security agent utilizes a decision validation model to update predictions of a prediction model of the security agent.
FIG. 5 shows a flowchart of an example method in which a computing device with a security service trains a decision validation model for a prediction model of a security agent when the prediction model generates false positive predictions or false negative predictions.

### DETAILED DESCRIPTION

Security agents configured to protect user computing devices from malware can include one or more prediction models - e.g., a prediction model for each type of file - to arrive at decisions for different inputs. Given one input vector, a prediction model may output a high confidence decision value indicating that a process is malicious. But given a different input vector, the prediction model may output a low confidence decision that a different process is malicious or may output a decision value indicating that the process is benign. The prediction models may comprise weights and confidence thresholds learned over time and executed on, e.g., a neural network of the security agent. As mentioned herein, however, the prediction models may occasionally output false positive predictions (also referred to herein as "false positive results") or false negative predictions (also referred to herein as "false negative results"). One solution to the problem of false predictions is to update the security agent itself with executable code but doing so presents a security risk that could be exploited by malware.

This disclosure describes the training and utilization of a decision validation model to update a decision from a prediction model, correcting false predictions. The decision validation model may serve as a data-only, non-executable update for the security agent. It may be trained by a remote security service associated with the security agent with the input vector and decision value of the prediction model that are associated with the false prediction and provided to the security agent. The security agent may be configured to check for a decision validation model after a prediction model has reached a decision and, if there is a decision validation model for that prediction model, the security agent invokes one of its functions (e.g., a prediction function) to utilize the decision validation model. Taking the input vector and decision value of the prediction model as inputs, the decision validation model may then output decision value that differs from that of the prediction model. The decision values of the decision validation model and the prediction model may represent the same outcome (e.g., "process is malware") but have different confidences for that outcome, or the decision values of the decision validation model and the prediction model may represent different outcomes. Both decision values are then provided to a security service, which may use the decision value of the decision validation model as the outcome for the prediction model.

### Overview

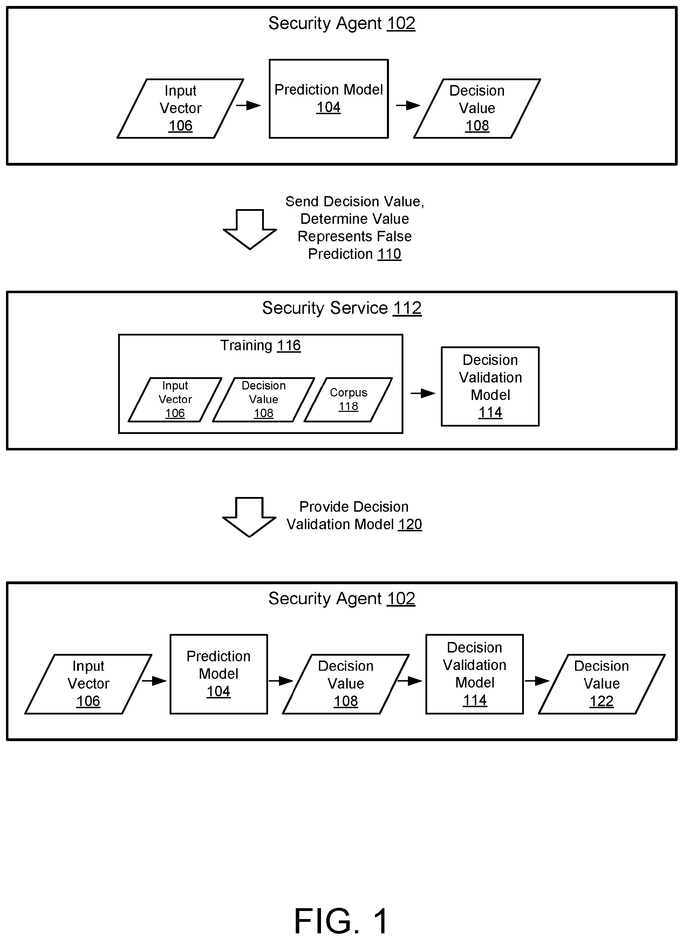

FIG. 1 illustrates an overview of training and utilizing a decision prediction model to update predictions of a prediction model of the security agent when the prediction model generates false positive predictions or false negative predictions. As illustrated, a security agent 102 may include a prediction model 104 which takes as an input vector 106 events that occur on a computing device implementing the security agent 102. Based on the input vector 106, the security agent 102 uses the prediction model 104 to reach a decision represented by decision value 108. At 110, the security agent 102 sends the decision value 108 to a security service 112, and it is determined that the decision value 108 represents a false positive prediction or false negative prediction. The security service 112 builds a data-only, non-executable decision validation model 114 to update the decision of the prediction model 104. The security service 112 trains, at 116, the decision validation model 114 based on the input vector 106, the decision value 108, and a corpus 118. The security service 112 then provides, at 120, the decision validation model 114 to the security agent 102. When the prediction model 104 is again utilized by the security agent 102 for input vector 106, the security agent 102 invokes one of its functions to utilize the decision validation model 114, with the input vector 106 and decision value 108 from the prediction model 104 as inputs to the decision validation model 114. The decision validation model 114 then outputs a decision value 122. The decision value 122 is different from the decision value 108. In some examples, the decision value 122 may correct the decision of the prediction model 104 such that the decision no longer represents a false positive or false positive prediction.

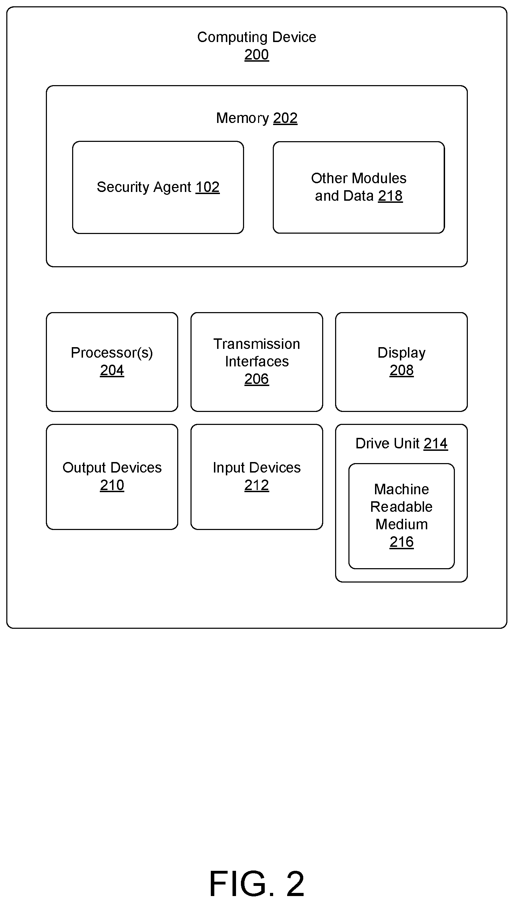

In various implementations, the computing device configured with the security agent 102 may be any sort of computing device, such as a mobile phone (e.g., a smart phone or other cellular phone), a personal computer (PC), a laptop computer, a desktop computer, a tablet computer, a personal digital assistant (PDA), a media player, a gaming device, a smart watch, a hotspot, an Internet of Things (IoT) device, a wearable device, an extended reality (XR) device, an augmented reality (AR)/virtual reality (VR) device, a workstation, or any other type of computing device. An example computing device is illustrated in FIG. 2 and described further herein with reference to that figure.

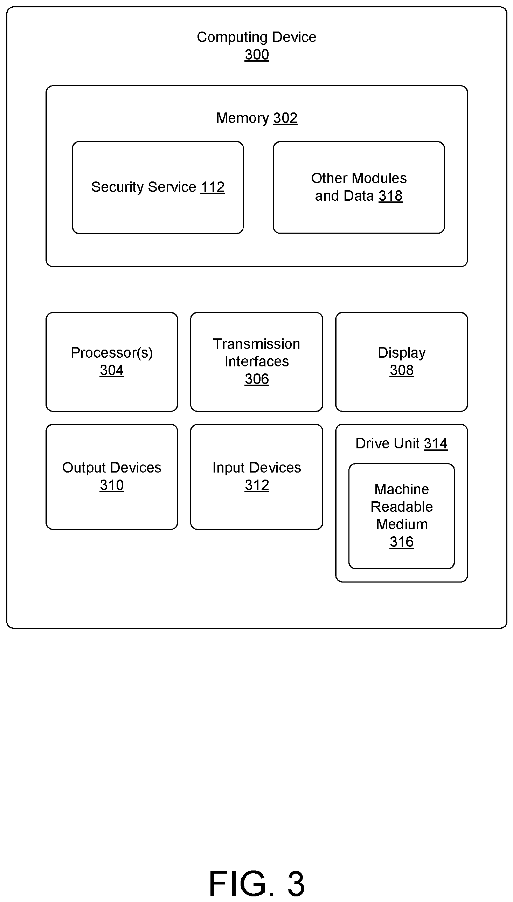

The computing device(s) implementing the security service 112 may be a service cloud, single device, or other grouping of devices. Such computing device(s) may include PCs, workstations, server computers, mainframes, or any other type of computing device. An example computing device is illustrated in FIG. 3 and described further herein with reference to that figure.

The computing devices configured with the security agent 102 and implementing the security service 112 may be connected by any sort of network(s), such as a public wide area network (WAN), a private WAN, a local area network (LAN), a cellular communication network (which may include a core network connected to multiple access points providing connectivity using radio frequency (RF)), a local unlicensed wireless network, such as a home or business Wi-Fi network.

In various implementations, the security agent 102 may include the components shown in FIG. 1, such as the prediction model 104 and the decision validation model 114, as well as functions for executing a neural network, model prediction logic, or other structure that uses the prediction model 104 or decision validation model 114 (e.g., for its weights, activation function identifiers, and thresholds). The prediction model 104 and the decision validation model 114 may themselves be data-only, with executable code of the security agent 102 using them. The security agent 102 may also include a component for communication to the security service 112, providing the input vector 106 and decision values 108 and 122 to the security service 112 and receiving the decision validation model 114 from the security service 112. More generally, the security agent 102 may detect or create events that it provides to the security service 112 and receive instructions and updates. The security agent 102 may utilize hooks, filter drivers, etc. to detect activities on the computing device configured with it, analyze what is detected in view of models (e.g., prediction model 104), indicators of attack, configuration, policy, etc., take action and/or inform the security service 112.

The security agent 102 may be a client application of the service application implemented by the security service 112. The security service 112 may surface information to security personnel that can enable detection of false positive predictions and false negative predictions, train, at 116, a decision validation model 114 to correct the false predictions and provide it to the effected computing devices. In some examples, the security service 112 may take actions through the security agent 102 to implement security actions (e.g., blocking a process, rebooting a device, updating a configuration or policy, sandboxing a suspected exploit, etc.). The security service 112 may also serve as a central point for collecting information from multiple security agents 102, analyzing that information, and utilizing it to track and surface relevant security measures. The analyzed information can also be used in generating indicators of attack, new security configurations, new policies, etc., which the security service 112 can provide to the security agent 102. Further, the security service 112 can provide new versions of the security agent 102 to the computing device configured with it when such a new version is needed.

In some implementations, as shown at FIG. 1, the prediction model 104 of the security agent 102 takes an input vector 106 as input. The input vector 106 represents any one or more events detected by the security agent 102 based on its configuration or policy. The configuration or policy may define specific activities and events occurring on the computing device that the security agent 102 takes note of. When events and activities matching those defined for the input vector 106 occur, the security agent 102 utilizes those activities/events as the input vector 106 for input to the prediction model 104. This may involve the security agent 102 initializing the prediction model 104 (e.g., initializing a neural network or model predication logic with information from the prediction model 104) or, when the prediction model 104 is initialized, providing the input vector 106 as input. As noted herein, the security agent 102 may have multiple prediction models 104 (e.g., a model for each file type), and events/activities may serve as inputs to multiple different prediction models 104.

The prediction model 104 may then be used by the security agent 102 to process the input vector 106 and output a decision - represented by a decision value 108 - based on that processing. The decision may be assigned a decision confidence based on decision confidence thresholds of the prediction model 104. For example, the decision may be "malicious" or "benign", and the confidence may be "high probability" or "low probability." In some implementations, there may only be one decision (e.g., malicious) with decision confidence indicating the probability. Once the decision and confidence are determined and represented as the decision value 108, that decision value 108 can be sent, at 110, as output to the security service 112 for storage, analysis, and further use. Additionally, prior to sending, at 110, to the security service 112, and before or after assigning the decision confidence for the decision value 108, the security agent 102 may determine whether there is a decision validation model 114 for the prediction model. As shown at the top of FIG. 1, the prediction model 104 may initially not have a decision validation model 114, in which case the security agent 102 may proceed to simply send, at 110, the decision value 108 to the security service 112.

In various implementations, someone or something may determine, at 110, that the decision value 108 reflects a false positive prediction or false negative prediction. That someone or something may be security personnel associated with the entity implementing the security service 112 or with an entity owning/leasing the computing device configured with the security agent 102. The security personnel may receive visualizations or other information reflective of the decision value 108 and may determine that it reflects a false prediction based on the visualizations or other information. In some implementations, the visualizations or other information may show decision values 108 or related information from multiple computing devices configured with security agents 102 and may, at 110, decide based on the totality of that information whether the decision values 108 represent a false prediction. In other implementations, part or all of the determination, at 110, that the decision value is a false prediction may be made by artificial intelligence or a learning model, either working alone or in conjunction with security personnel.

In some implementations, to address the false prediction, the security service may, at 116, train a decision validation model 114. As noted herein, the decision validation model 114 may be non-executable, data-only information comprising, e.g., weights and activation function identifiers for a generic neural network and confidence thresholds for decision values. The training, at 116, may utilize both the input vector 106 and decision value 108. By using the decision value 108, the security service 112 is able to complete the training much more promptly and build a simpler, smaller model. In addition to the input vector 106 and decision value 108, the security service 112 may utilize a corpus 118, which may be automatically compiled based on associations to the input vector 106, decision value 108, or something else (e.g., the file type associated with the prediction model 104) using, e.g., corpus augmentation techniques. Alternatively or additionally, security personnel may assist in/be responsible for compiling the corpus 118. With those three inputs the decision validation model 114 is trained, at 116. The result may be provided, at 120 to the security agent 102 and invoked each time the prediction model 104 outputs a decision.

At 120, after the decision validation model 114 is trained, the security service 112 provides it to the security agent 102 using, e.g., an updater or communication component of the security agent 102. The security agent 102 then updates information, code, or the prediction model 104 to indicate that there is a decision validation model 114 for the prediction model 104. This update may be as simple as updating a value or a flag.

When the security agent 102 again detects activities/events forming the input vector 106, the prediction model 104 is again processed/used for the input vector 106, outputting a decision based on it in the manner discussed herein. Either before that decision is assigned a decision confidence or afterwards, the security agent checks to determine if there is a decision validation model 114 for the prediction model 104 and determines that there is a decision validation model 114. The security agent 102 then invokes/initializes one of its functions (e.g., a predictor function) and utilizes the decision validation model 114 as weights, activation function identifiers, and decision confidence thresholds of a generic neural network. The input vector 106 and decision value 108 are then used as inputs for the decision validation model 114, and the decision validation model 114 outputs decision value 122 as its result. The decision value 122 may represent the same decision (e.g., malicious) but a different confidence threshold (high likelihood vs. low likelihood) from the decision value 108 or may represent a different decision (malicious vs not malicious). The security agent 102 may then send the decision value 122 to the security service 112. In some implementations, the security agent 102 may send the decision value 108 along with the decision value 122 or may send both and send them separately.

Once the decision validation model 114 has been flagged for the prediction model 104, it may also be applied to different input vectors for the prediction model 104. Such other, different input vectors may be associated with a different decision value that is not reflective of a false prediction. Thus, when the decision validation model 114 is applied after the prediction model 104 to the different input vector and its resultant different decision value, the decision validation model 114 may result in a decision value that is the same as the different decision value. Application of the decision validation model 114 to a result of the prediction model 104 may only result in a reversal of decision or different decision when the input vector 106 results in decision value 108 and when decision value 108 is reflective of a false prediction.

In various implementations, there may be a need for an update to the decision validation model 114. For example, the decision value 122 may still reflect a false prediction. Perhaps it reflects a lower level of confidence in a false prediction but does not revise the confidence or result sufficiently far. In another example, a different input vector and different decision value for the prediction model 104 may also reflect a false prediction, and the decision validation model 114 may be updated to correct for that false prediction, too. When an updated decision validation model 114 is needed, it may be trained, at 116, with the input vector 106 and decision values 108, 122, or both, and in some circumstances, with a revised corpus. The updated decision validation model 114 may then be provided by the security service 112 to the security agent 102, and it may overwrite the decision validation model 114 or be stored along with it, with, e.g., a higher/different version number.

In some implementations, the prediction models of the security agent 102, including prediction model 104, may each be associated with a single decision validation model 114. Alternatively, some of the prediction models may be associated with a decision validation model 114 while others may not be associated with a decision validation model 114. In yet other implementations, some prediction models may be associated with multiple prediction models (e.g., a different prediction model for each input vector).

### Example Architectures

FIG. 2 shows an example of a system architecture for a computing device 200 configured with a security agent 102. The computing device 200 can have at least one memory 202, processor(s) 204, one or more transmission interfaces 206, a display 208, output devices 210, input devices 212, and/or a drive unit 214 including a machine readable medium 216.

In various examples, the memory 202 can include system memory, which may be volatile (such as RAM), non-volatile (such as ROM, flash memory, etc.) or some combination of the two. The memory 202 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium that can be used to store the desired information and accessed by the computing device 200. Any such non-transitory computer-readable media may be part of the computing device 200.

The memory 202 can include one or more software or firmware elements, such as computer-readable instructions that are executable by the one or more processors 204. For example, the memory 202 can store computer-executable instructions associated with a security agent 102. Such a security agent 102 is described in greater detail throughout the disclosure. The memory 202 can also store other modules and data 218, which can be utilized by the computing device 200 to perform or enable performing any action taken by the computing device 200. The other modules and data 218 can include an operating system, applications, and data utilized by the operating system and applications.

In various examples, the processor(s) 204 can be a CPU, a graphics processing unit (GPU), or both CPU and GPU, or any other type of processing unit. Each of the one or more processor(s) 204 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 204 may also be responsible for executing all computer applications stored in the memory 202, which can be associated with types of volatile (RAM) and/or nonvolatile (ROM) memory.

The transmission interfaces 206 can include transceivers, modems, interfaces, antennas, and/or other components that perform or assist in exchanging wireless communications with base stations, Wi-Fi access points, etc. The transmission interfaces 206 can also include components for wired communications, such as Ethernet interfaces for receiving Ethernet plugs.

The display 208 can be a liquid crystal display or any other type of display commonly used with computing devices. For example, the display 208 may be a touch-sensitive display screen and can thus also act as an input device or keypad, such as for providing a soft-key keyboard, navigation buttons, or any other type of input.

The output devices 210 can include any sort of output devices known in the art, such as the display 208, speakers, a vibrating mechanism, and/or a tactile feedback mechanism. Output devices 210 can also include ports for one or more peripheral devices, such as headphones, peripheral speakers, a peripheral display, a printer, a watch, a headset, etc.

The input devices 212 can include any sort of input devices known in the art. For example, input devices 212 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism. The input devices 212 can also include peripheral devices such as keyboards, mice, headsets, game controllers, watches, cameras, etc.

The machine readable medium 216 of a drive unit 214 can store one or more sets of instructions, such as software or firmware, that embodies any one or more of the methodologies or functions described herein. The instructions can also reside, completely or at least partially, within the memory 202, processor(s) 204, and/or transmission interface(s) 206 during execution thereof by the computing device 200.

FIG. 3 shows an example of a system architecture for a computing device 300 configured with a security service 112. The computing device 300 can have at least one memory 302, processor(s) 304, one or more transmission interfaces 306, a display 308, output devices 310, input devices 312, and/or a drive unit 314 including a machine readable medium 316.

In various examples, the memory 302 can include system memory, which may be volatile (such as RAM), non-volatile (such as ROM, flash memory, etc.) or some combination of the two. The memory 302 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium that can be used to store the desired information and accessed by the computing device 300. Any such non-transitory computer-readable media may be part of the computing device 300.

The memory 302 can include one or more software or firmware elements, such as computer-readable instructions that are executable by the one or more processors 304. For example, the memory 302 can store computer-executable instructions associated with a security service 112. Such a security service 112 is described in greater detail throughout the disclosure. The memory 302 can also store other modules and data 318, which can be utilized by the computing device 300 to perform or enable performing any action taken by the computing device 300. The other modules and data 318 can include an operating system, applications, and data utilized by the operating system and applications.

In various examples, the processor(s) 304 can be a CPU, a graphics processing unit (GPU), or both CPU and GPU, or any other type of processing unit. Each of the one or more processor(s) 304 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 304 may also be responsible for executing all computer applications stored in the memory 302, which can be associated with types of volatile (RAM) and/or nonvolatile (ROM) memory.

The transmission interfaces 306 can include transceivers, modems, interfaces, antennas, and/or other components that perform or assist in exchanging wireless communications with base stations, Wi-Fi access points, etc. The transmission interfaces 306 can also include components for wired communications, such as Ethernet interfaces for receiving Ethernet plugs.

The display 308 can be a liquid crystal display or any other type of display commonly used with computing devices. For example, the display 308 may be a touch-sensitive display screen and can thus also act as an input device or keypad, such as for providing a soft-key keyboard, navigation buttons, or any other type of input.

The output devices 310 can include any sort of output devices known in the art, such as the display 308, speakers, a vibrating mechanism, and/or a tactile feedback mechanism. Output devices 310 can also include ports for one or more peripheral devices, such as headphones, peripheral speakers, a peripheral display, a printer, a watch, a headset, etc.

The input devices 312 can include any sort of input devices known in the art. For example, input devices 312 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism. The input devices 312 can also include peripheral devices such as keyboards, mice, headsets, game controllers, watches, cameras, etc.

The machine readable medium 316 of a drive unit 314 can store one or more sets of instructions, such as software or firmware, that embodies any one or more of the methodologies or functions described herein. The instructions can also reside, completely or at least partially, within the memory 302, processor(s) 304, and/or transmission interface(s) 306 during execution thereof by the computing device 300.

### Example Operations

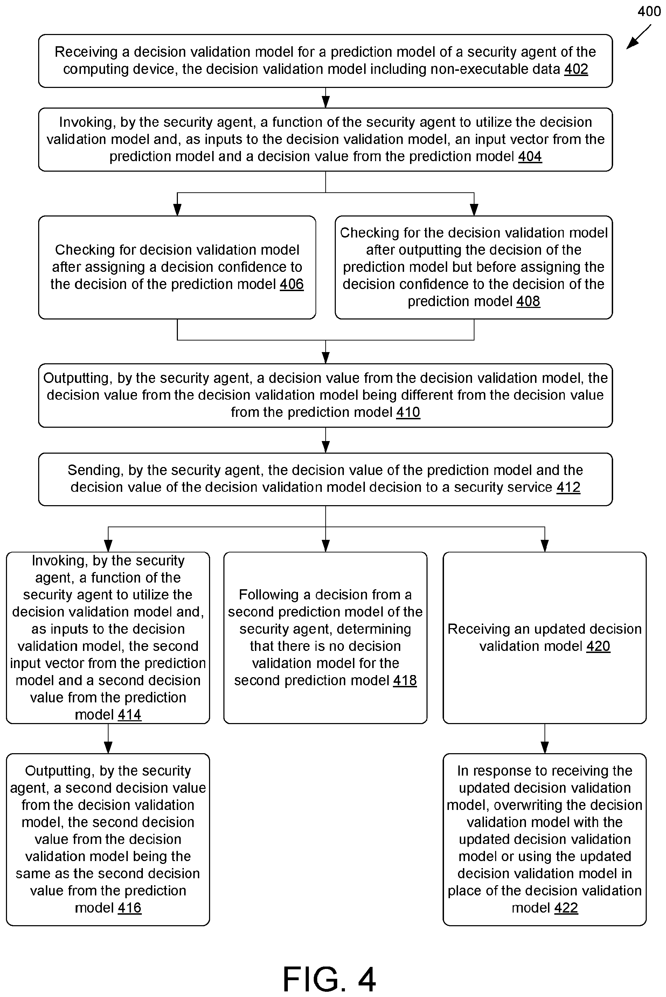

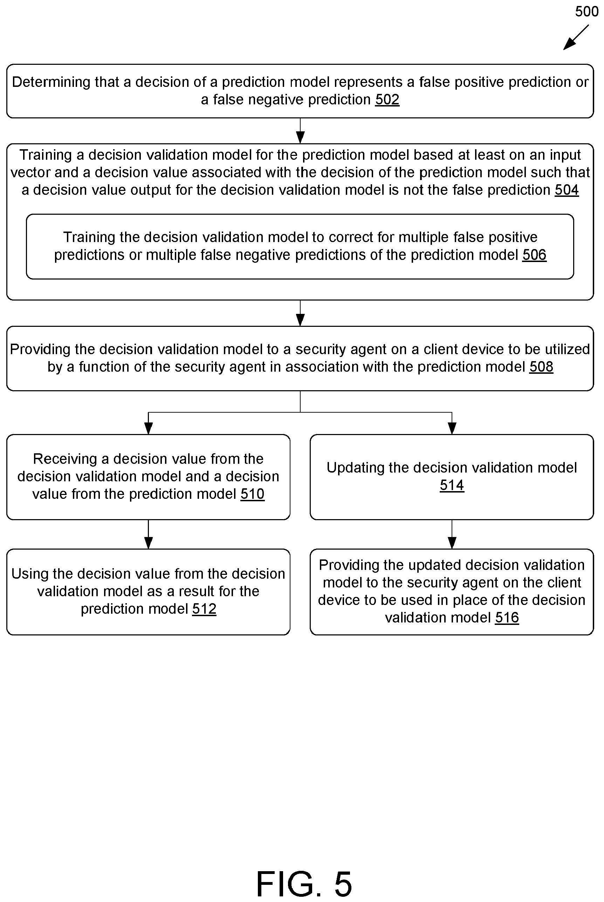

FIGs. 4 and 5 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 4 shows a flowchart 400 of an example method in which a computing device with a security agent utilizes a decision validation model to update predictions of a prediction model of the security agent. At 402, the security agent receives a decision validation model for a prediction model of a security agent of the computing device. The decision validation model includes non-executable data. The non-executable data of the decision validation model may in turn include weights and activation function identifiers for a generic neural network of the security agent and decision confidence thresholds for assigning decision confidences to decisions of the decision validation model.

At 404, following a decision from prediction model, the security agent invokes one of its functions to utilize the decision validation model and, as inputs to the decision validation model, an input vector from the prediction model and a decision value from the prediction model. The decision of the prediction model may represent a false positive result or a false negative result. The decision validation model may change the decision from prediction model result given the input vector and the decision value of the prediction model.

At 406, the security agent may check for the decision validation model after assigning a decision confidence to the decision of the prediction model. Alternatively, at 408, the security agent may check for the decision validation model after outputting the decision of the prediction model but before assigning the decision confidence to the decision of the prediction model.

At 410, the security agent outputs a decision value from the decision validation model and that decision value from the decision validation model is different from the decision value from the prediction model. The difference between the decision value of the prediction model and the decision value of the decision validation model may be a difference in decision confidence or a different prediction.

At 412, the security agent may then send the decision value of the prediction model and the decision value of the decision validation model decision to a security service.

At 414-422, the security agent may then perform zero, one, or more alternative sets of operations.

At 414, following a second decision from the prediction model based on a second input vector, the security agent invokes one of its functions to utilize the decision validation model and, as inputs to the decision validation model, the second input vector from the prediction model and a second decision value from the prediction model. At 416, the security agent the outputs a second decision value from the decision validation model, the second decision value from the decision validation model being the same as the second decision value from the prediction model.

At 418, following a decision from a second prediction model of the security agent, the security agent may determine that there is no decision validation model for the second prediction model.

At 420, the security agent may receive an updated decision validation model. At 422, in response to receiving the updated decision validation model, the security agent overwrites the decision validation model with the updated decision validation model or uses the updated decision validation model in place of the decision validation model.

FIG. 5 shows a flowchart 500 of an example method in which a computing device with a security service trains a decision validation model for a prediction model of a security agent when the prediction model generates false positive predictions or false negative predictions. At 502, the security service determines that a decision of a prediction model represents a false positive prediction or a false negative prediction.

At 504, in response to the determining, the security service trains a decision validation model for the prediction model based at least on an input vector associated with the decision of the prediction model and a decision value associated with the decision of the prediction model such that a decision value output for the decision validation model is not the false positive prediction or the false negative prediction. At 506, the training may comprise training the decision validation model to correct for multiple false positive predictions or multiple false negative predictions of the prediction model.

At 508, the security service provides the decision validation model to a security agent on a client device to be utilized by a function of the security agent in association with the prediction model.

In some implementations, the security service may, at 510, receive a decision value from the decision validation model and a decision value from the prediction model and, at 512, use the decision value from the decision validation model as a result for the prediction model.

In various implementations, the security service may, at 514, update the decision validation model and, at 516, provide the updated decision validation model to the security agent on the client device to be used in place of the decision validation model.

### Conclusion

Although the subject matter has been described in language specific to structural features and/or methodological acts, it is to be understood that the subject matter is not necessarily limited to the specific features or acts described above. Rather, the specific features and acts described above are disclosed as example embodiments.

## Claims

1. A method (400) comprising:
receiving from a security service (402), by a computing device, a decision validation model for a prediction model of a security agent of the computing device, the decision validation model including non-executable data;
following a decision from prediction model, invoking (404), by the security agent, a function of the security agent to utilize the decision validation model and, as inputs to the decision validation model, an input vector from the prediction model and a decision value from the prediction model; and
outputting (410), by the security agent, a decision value from the decision validation model indicating that a process is malicious or benign, the decision value from the decision validation model being different from the decision value from the prediction model.

2. The method (400) of claim 1, wherein the decision of the prediction model represents a false positive result or a false negative result.

3. The method (400) of claim 1 or 2, wherein the non-executable data of the decision validation model includes weights and activation function identifiers for a generic neural network of the security agent and decision confidence thresholds for assigning decision confidences to decisions of the decision validation model.

4. The method (400) of any preceding claim, wherein the decision validation model changes the decision from prediction model result given the input vector and the decision value.

5. The method (400) of any preceding claim, wherein the difference between the decision value of the prediction model and the decision value of the decision validation model is a difference in decision confidence or a different prediction.

6. The method (400) of any preceding claim, further comprising sending (412), by the security agent, the decision value of the prediction model and the decision value of the decision validation model to a security service.

7. The method (400) of any preceding claim, further comprising:
following a second decision from the prediction model based on a second input vector, invoking (414), by the security agent, a function of the security agent to utilize the decision validation model and, as inputs to the decision validation model, the second input vector from the prediction model and a second decision value from the prediction model; and
outputting (416), by the security agent, a second decision value from the decision validation model, the second decision value from the decision validation model being the same as the second decision value from the prediction model.

8. The method (400) of any one of claims 1 to 6, further comprising, following a decision from a second prediction model of the security agent, determining (418) that there is no decision validation model for the second prediction model.

9. The method (400) of any one of claims 1 to 7, further comprising:
checking (406) for decision validation model after assigning a decision confidence to the decision of the prediction model; or
checking (408) for the decision validation model after outputting the decision of the prediction model but before assigning the decision confidence to the decision of the prediction model.

10. The method (400) of any preceding claim, further comprising:
receiving (420) an updated decision validation model; and
in response to receiving the updated decision validation model, overwriting (422) the decision validation model with the updated decision validation model or using the updated decision validation model in place of the decision validation model.

11. A computing device (200, 300) comprising:
a processor (204, 304); and
programming instructions configured to be operated by the processor (204, 304) to implement a security agent to perform the method (400) of any one of claims 1 to 10.

12. A computer-implemented method (500) comprising:
determining (502), by a security service, that a decision of a prediction model represents a false positive prediction or a false negative prediction;
in response to the determining, training (504), by the security service, a decision validation model for the prediction model based at least on an input vector associated with the decision of the prediction model and a decision value associated with the decision of the prediction model such that a decision value output for the decision validation model is not the false positive prediction or the false negative prediction; and
providing (508), by the security service, the decision validation model to a security agent on a client device to be utilized by a function of the security agent in association with the prediction model.

13. The computer-implemented method (500) of claim 12, further comprising:
receiving (510) a decision value from the decision validation model and a decision value from the prediction model; and
using (512) the decision value from the decision validation model as a result for the prediction model.

14. The computer-implemented method (500) of claim 12 or 13, wherein the training comprises training the decision validation model to correct for multiple false positive predictions or multiple false negative predictions of the prediction model.

15. The computer-implemented method (500) of any one of claims 12 to 14, further comprising:
updating (514) the decision validation model; and
providing (516) the updated decision validation model to the security agent on the client device to be used in place of the decision validation model.

16. The computer implemented method (500) of any one of claims 12 to 15, further comprising:
receiving (510) a decision value from the decision validation model and a decision value from the prediction model; and
using (512) the decision value from the decision validation model as a result for the prediction model.

17. A system (200, 300) comprising:
one more processors (204, 304); and
programming instructions configured to be operated by the processors (204, 304) to perform the method (500) of any one of claims 12 to 16.

## Patentansprüche

1. Ein Verfahren (400), das Folgendes beinhaltet:
Empfangen, von einem Sicherheitsdienst (402), durch eine Rechenvorrichtung, eines Entscheidungsvalidierungsmodells für ein Vorhersagemodell eines Sicherheitsagenten der Rechenvorrichtung, wobei das Entscheidungsvalidierungsmodell nicht ausführbare Daten umfasst;
nach einer Entscheidung von dem Vorhersagemodell, Aufrufen (404), durch den Sicherheitsagenten, einer Funktion des Sicherheitsagenten zum Benutzen des Entscheidungsvalidierungsmodells und, als Eingaben in das Entscheidungsvalidierungsmodell, eines Eingabevektors von dem Vorhersagemodell und eines Entscheidungswerts von dem Vorhersagemodell; und
Ausgeben (410), durch den Sicherheitsagenten, eines Entscheidungswerts von dem Entscheidungsvalidierungsmodell, der angibt, dass ein Prozess bösartig oder gutartig ist, wobei sich der Entscheidungswert von dem Entscheidungsvalidierungsmodell von dem Entscheidungswert von dem Vorhersagemodell unterscheidet.

2. Verfahren (400) gemäß Anspruch 1, wobei die Entscheidung des Vorhersagemodells ein falsch positives Ergebnis oder ein falsch negatives Ergebnis darstellt.

3. Verfahren (400) gemäß Anspruch 1 oder 2, wobei die nicht ausführbaren Daten des Entscheidungsvalidierungsmodells Gewichte und Aktivierungsfunktionskennungen für ein generisches neuronales Netzwerk des Sicherheitsagenten und Entscheidungskonfidenzschwellenwerte zum Zuweisen von Entscheidungskonfidenzen zu Entscheidungen des Entscheidungsvalidierungsmodells umfassen.

4. Verfahren (400) gemäß einem der vorhergehenden Ansprüche, wobei das Entscheidungsvalidierungsmodell die Entscheidung von dem Vorhersagemodellergebnis angesichts des Eingabevektors und des Entscheidungswerts ändert.

5. Verfahren (400) gemäß einem der vorhergehenden Ansprüche, wobei die Differenz zwischen dem Entscheidungswert des Vorhersagemodells und dem Entscheidungswert des Entscheidungsvalidierungsmodells eine Differenz in der Entscheidungskonfidenz oder eine differente Vorhersage ist.

6. Verfahren (400) gemäß einem der vorhergehenden Ansprüche, das ferner das Senden (412), durch den Sicherheitsagenten, des Entscheidungswerts des Vorhersagemodells und des Entscheidungswerts des Entscheidungsvalidierungsmodells an einen Sicherheitsdienst beinhaltet.

7. Verfahren (400) gemäß einem der vorhergehenden Ansprüche, das ferner Folgendes beinhaltet:
nach einer zweiten Entscheidung von dem Vorhersagemodell basierend auf einem zweiten Eingabevektor, Aufrufen (414), durch den Sicherheitsagenten, einer Funktion des Sicherheitsagenten zum Benutzen des Entscheidungsvalidierungsmodells und, als Eingaben in das Entscheidungsvalidierungsmodell, des zweiten Eingabevektors von dem Vorhersagemodell und eines zweiten Entscheidungswerts von dem Vorhersagemodell; und
Ausgeben (416), durch den Sicherheitsagenten, eines zweiten Entscheidungswerts von dem Entscheidungsvalidierungsmodell, wobei der zweite Entscheidungswert von dem Entscheidungsvalidierungsmodell der gleiche wie der zweite Entscheidungswert von dem Vorhersagemodell ist.

8. Verfahren (400) gemäß einem der Ansprüche 1 bis 6, das ferner, nach einer Entscheidung von einem zweiten Vorhersagemodell des Sicherheitsagenten, das Bestimmen (418), dass es kein Entscheidungsvalidierungsmodell für das zweite Vorhersagemodell gibt, beinhaltet.

9. Verfahren (400) gemäß einem der Ansprüche 1 bis 7, das ferner Folgendes beinhaltet: Suchen (406) eines Entscheidungsvalidierungsmodells nach dem Zuweisen einer Entscheidungskonfidenz zu der Entscheidung des Vorhersagemodells; oder Suchen (408) des Entscheidungsvalidierungsmodells nach dem Ausgeben der Entscheidung des Vorhersagemodells, aber vor dem Zuweisen der Entscheidungskonfidenz zu der Entscheidung des Vorhersagemodells.

10. Verfahren (400) gemäß einem der vorhergehenden Ansprüche, das ferner Folgendes beinhaltet:
Empfangen (420) eines aktualisierten Entscheidungsvalidierungsmodells; und
als Reaktion auf das Empfangen des aktualisierten Entscheidungsvalidierungsmodells, Überschreiben (422) des Entscheidungsvalidierungsmodells mit dem aktualisierten Entscheidungsvalidierungsmodell oder Verwenden des aktualisierten Entscheidungsvalidierungsmodells anstelle des Entscheidungsvalidierungsmodells.

11. Eine Rechenvorrichtung (200, 300), die Folgendes beinhaltet:
einen Prozessor (204, 304); und
Programmieranweisungen, die konfiguriert sind, um durch den Prozessor (204, 304) betrieben zu werden, um einen Sicherheitsagenten zu implementieren, um das Verfahren (400) gemäß einem der Ansprüche 1 bis 10 durchzuführen.

12. Ein rechnerimplementiertes Verfahren (500), das Folgendes beinhaltet:
Bestimmen (502), durch einen Sicherheitsdienst, dass eine Entscheidung eines Vorhersagemodells eine falsch positive Vorhersage oder eine falsch negative Vorhersage darstellt;
als Reaktion auf das Bestimmen, Trainieren (504), durch den Sicherheitsdienst, eines Entscheidungsvalidierungsmodells für das Vorhersagemodell basierend mindestens auf einem Eingabevektor, der mit der Entscheidung des Vorhersagemodells assoziiert ist, und einem Entscheidungswert, der mit der Entscheidung des Vorhersagemodells assoziiert ist, sodass ein Entscheidungswert, der für das Entscheidungsvalidierungsmodell ausgegeben wird, nicht die falsch positive Vorhersage oder die falsch negative Vorhersage ist; und Bereitstellen (508), durch den Sicherheitsdienst, des Entscheidungsvalidierungsmodells für einen Sicherheitsagenten auf einer Client-Vorrichtung, damit es durch eine Funktion des Sicherheitsagenten in Assoziation mit dem Vorhersagemodell benutzt werden kann.

13. Rechnerimplementiertes Verfahren (500) gemäß Anspruch 12, das ferner Folgendes beinhaltet:
Empfangen (510) eines Entscheidungswerts von dem Entscheidungsvalidierungsmodell und eines Entscheidungswerts von dem Vorhersagemodell; und
Verwenden (512) des Entscheidungswerts von dem Entscheidungsvalidierungsmodell als ein Ergebnis für das Vorhersagemodell.

14. Rechnerimplementiertes Verfahren (500) gemäß Anspruch 12 oder 13, wobei das Trainieren das Trainieren des Entscheidungsvalidierungsmodells zum Korrigieren mehrerer falsch positiver Vorhersagen oder mehrerer falsch negativer Vorhersagen des Vorhersagemodells beinhaltet.

15. Rechnerimplementiertes Verfahren (500) gemäß einem der Ansprüche 12 bis 14, das ferner Folgendes beinhaltet:
Aktualisieren (514) des Entscheidungsvalidierungsmodells; und
Bereitstellen (516) des aktualisierten Entscheidungsvalidierungsmodells für den Sicherheitsagenten auf der Client-Vorrichtung, damit es anstelle des Entscheidungsvalidierungsmodells verwendet werden kann.

16. Rechnerimplementiertes Verfahren (500) gemäß einem der Ansprüche 12 bis 15, das ferner Folgendes beinhaltet:
Empfangen (510) eines Entscheidungswerts von dem Entscheidungsvalidierungsmodell und eines Entscheidungswerts von dem Vorhersagemodell; und
Verwenden (512) des Entscheidungswerts von dem Entscheidungsvalidierungsmodell als ein Ergebnis für das Vorhersagemodell.

17. Ein System (200, 300), das Folgendes beinhaltet:
einen oder mehrere Prozessoren (204, 304); und
Programmieranweisungen, die konfiguriert sind, um durch die Prozessoren (204, 304) betrieben zu werden, um das Verfahren (500) gemäß einem der Ansprüche 12 bis 16 durchzuführen.

## Revendications

1. Un procédé (400) comprenant :
le fait de recevoir en provenance d'un service de sécurité (402), par un dispositif de calcul, un modèle de validation de décision pour un modèle de prédiction d'un agent de sécurité du dispositif de calcul, le modèle de validation de décision incluant des données non exécutables ;
à la suite d'une décision issue d'un modèle de prédiction, le fait d'invoquer (404), par l'agent de sécurité, une fonction de l'agent de sécurité afin d'utiliser le modèle de validation de décision et, en tant qu'entrées du modèle de validation de décision, un vecteur d'entrée issu du modèle de prédiction et une valeur de décision issue du modèle de prédiction ; et
le fait d'émettre en sortie (410), par l'agent de sécurité, une valeur de décision issue du modèle de validation de décision indiquant qu'un processus est malveillant ou inoffensif, la valeur de décision issue du modèle de validation de décision étant différente de la valeur de décision issue du modèle de prédiction.

2. Le procédé (400) de la revendication 1, dans lequel la décision du modèle de prédiction représente un faux résultat positif ou un faux résultat négatif.

3. Le procédé (400) de la revendication 1 ou de la revendication 2, dans lequel les données non exécutables du modèle de validation de décision incluent des poids et des identifiants de fonction d'activation pour un réseau neuronal générique de l'agent de sécurité et des seuils de confiance de décision pour attribuer des confiances de décision à des décisions du modèle de validation de décision.

4. Le procédé (400) de n'importe quelle revendication précédente, dans lequel le modèle de validation de décision modifie la décision issue d'un résultat de modèle de prédiction au vu du vecteur d'entrée et de la valeur de décision.

5. Le procédé (400) de n'importe quelle revendication précédente, dans lequel la différence entre la valeur de décision du modèle de prédiction et la valeur de décision du modèle de validation de décision est une différence de confiance de décision ou une prédiction différente.

6. Le procédé (400) de n'importe quelle revendication précédente, comprenant en outre le fait d'envoyer (412), par l'agent de sécurité, la valeur de décision du modèle de prédiction et la valeur de décision du modèle de validation de décision à un service de sécurité.

7. Le procédé (400) de n'importe quelle revendication précédente, comprenant en outre :
à la suite d'une deuxième décision issue du modèle de prédiction basée sur un deuxième vecteur d'entrée, le fait d'invoquer (414), par l'agent de sécurité, une fonction de l'agent de sécurité afin d'utiliser le modèle de validation de décision et, en tant qu'entrées du modèle de validation de décision, le deuxième vecteur d'entrée issu du modèle de prédiction et une deuxième valeur de décision issue du modèle de prédiction ; et
le fait d'émettre en sortie (416), par l'agent de sécurité, une deuxième valeur de décision issue du modèle de validation de décision, la deuxième valeur de décision issue du modèle de validation de décision étant la même que la deuxième valeur de décision issue du modèle de prédiction.

8. Le procédé (400) de n'importe laquelle des revendications 1 à 6, comprenant en outre, à la suite d'une décision issue d'un deuxième modèle de prédiction de l'agent de sécurité, le fait de déterminer (418) qu'il n'y a pas de modèle de validation de décision pour le deuxième modèle de prédiction.

9. Le procédé (400) de n'importe laquelle des revendications 1 à 7, comprenant en outre :
le fait de rechercher (406) un modèle de validation de décision après avoir attribué une confiance de décision à la décision du modèle de prédiction ; ou
le fait de rechercher (408) le modèle de validation de décision après avoir émis en sortie la décision du modèle de prédiction mais avant d'avoir attribué la confiance de décision à la décision du modèle de prédiction.

10. Le procédé (400) de n'importe quelle revendication précédente, comprenant en outre :
le fait de recevoir (420) un modèle de validation de décision mis à jour ; et
en réponse au fait de recevoir le modèle de validation de décision mis à jour, le fait d'écraser (422) le modèle de validation de décision avec le modèle de validation de décision mis à jour ou d'utiliser le modèle de validation de décision mis à jour à la place du modèle de validation de décision.

11. Un dispositif de calcul (200, 300) comprenant :
un processeur (204, 304) ; et
des instructions de programmation configurées pour être exploitées par le processeur (204, 304) afin de mettre en oeuvre un agent de sécurité afin de réaliser le procédé (400) de n'importe laquelle des revendications 1 à 10.

12. Un procédé mis en œuvre par ordinateur (500) comprenant :
le fait de déterminer (502), par un service de sécurité, qu'une décision d'un modèle de prédiction représente une fausse prédiction positive ou une fausse prédiction négative ; en réponse à cette détermination, le fait d'entraîner (504), par le service de sécurité, un modèle de validation de décision pour le modèle de prédiction sur la base d'au moins un vecteur d'entrée associé à la décision du modèle de prédiction et une valeur de décision associée à la décision du modèle de prédiction de telle sorte qu'une sortie de valeur de décision pour le modèle de validation de décision ne soit pas la fausse prédiction positive ou la fausse prédiction négative ; et
le fait de fournir (508), par le service de sécurité, le modèle de validation de décision à un agent de sécurité sur un dispositif client afin qu'il soit utilisé par une fonction de l'agent de sécurité en association avec le modèle de prédiction.

13. Le procédé mis en œuvre par ordinateur (500) de la revendication 12, comprenant en outre :
le fait de recevoir (510) une valeur de décision issue du modèle de validation de décision et une valeur de décision issue du modèle de prédiction ; et
le fait d'utiliser (512) la valeur de décision issue du modèle de validation de décision en tant que résultat pour le modèle de prédiction.

14. Le procédé mis en œuvre par ordinateur (500) de la revendication 12 ou de la revendication 13, dans lequel le fait d'entraîner comprend le fait d'entraîner le modèle de validation de décision afin de corriger de multiples fausses prédictions positives ou de multiples fausses prédictions négatives du modèle de prédiction.

15. Le procédé mis en œuvre par ordinateur (500) de n'importe laquelle des revendications 12 à 14, comprenant en outre :
le fait de mettre à jour (514) le modèle de validation de décision ; et
le fait de fournir (516) le modèle de validation de décision mis à jour à l'agent de sécurité sur le dispositif client afin qu'il soit utilisé à la place du modèle de validation de décision.

16. Le procédé mis en œuvre par ordinateur (500) de n'importe laquelle des revendications 12 à 15, comprenant en outre :
le fait de recevoir (510) une valeur de décision issue du modèle de validation de décision et une valeur de décision issue du modèle de prédiction ; et
le fait d'utiliser (512) la valeur de décision issue du modèle de validation de décision en tant que résultat pour le modèle de prédiction.

17. Un système (200, 300) comprenant :
un ou plusieurs processeurs (204, 304) ; et
des instructions de programmation configurées pour être exploitées par les processeurs (204, 304) afin de réaliser le procédé (500) de n'importe laquelle des revendications 12 à 16.
